# EUROPEAN PATENT SPECIFICATION

(11) **EP 1 039 485 B1**
(45) Date of publication and mention of the grant of the patent: **11.08.2004**
(21) Application number: 00106315.5
(22) Date of filing: 23.03.2000
(51) Int. Cl.: H01B 19/04, H01B 17/50

(54) **Porcelain insulator and method of manufacturing the same**
Porzellanisolator und Verfahren zu seiner Herstellung
Isolateur en porcelaine et méthode de sa fabrication

(30) Priority: 24.03.1999 JP 7883799
(43) Date of publication of application: 27.09.2000
(73) Proprietor: NGK INSULATORS, LTD., Nagoya City Aichi Pref. (JP)
(72) Inventor: Hiramitsu, Kumeo, Gifu City, Gifu Pref. (JP); Imai, Osamu, Kasugai-City, Aichi Pref. (JP); Ikari, Tokunori, Nagoya City, Aichi Pref. (JP)
(74) Representative: Leson, Thomas Johannes Alois, Dipl.-Ing.

(56) References cited:
- DE-A- 2 633 289
- DATABASE WPI Section Ch, Week 199236 Derwent Publications Ltd., London, GB; Class L03, AN 1992-298501 XP002138949 & SU 1 694 562 A (GEOR POLY), 30 November 1991 (1991-11-30)

## Description

### BACKGROUND OF THE INVENTION

### 1. Field of the Invention

The present invention relates to a porcelain insulator and a method of manufacturing the same, and particularly relates to a porcelain insulator and a method of manufacturing the same having an excellent mechanical strength and an excellent dielectric breakdown strength i.e. steep front of wave flashover strength.

### 2. Description of Related Art

Generally, porcelain insulators such as a post insulator and a suspension insulator are known as a member for insulating and mechanically supporting an aerial power line. Such porcelain insulators are manufactured by; forming a formed body by mixing raw materials such as alumina and clay and forming the mixed raw materials; applying a glaze on a surface of the thus obtained formed body; and firing the glazed formed body. In the known porcelain insulators mentioned above, a tensile strength of the porcelain insulator is generated by means of the glazing operation, since micro-defects on a surface of the porcelain insulator can be embedded and an internal stress can be generated due to a thermal expansion difference by using the glaze.

The known porcelain insulator mentioned above can endure sufficiently the use under a normal voltage and under a foul atmosphere. However, in the case that a higher voltage is applied thereto, that is, in the case that a thunder impulse voltage due to a natural thunder is applied thereto, the known porcelain insulator cannot endure such a situation sufficiently, and thus it is necessary to improve the dielectric breakdown strength of the known porcelain insulator drastically.

Moreover, as a technique for improving the steep front of wave flashover strength characteristics, the applicant proposed a technique in which a predetermined amount of MnO is added in the glaze as Japanese Patent Laid-Open Publication No. 63-211525 (JP-A-63-211525), a technique in which dielectric constants of sand and glaze in the suspension insulator are defined as Japanese Patent Laid-Open Publication No.9-63379 (JP-A-9-63379) and a technique in which corundum crystals are added in the porcelain as Japanese Patent Laid-Open Publication No. 10-228818 (JP-A-10-228818). However, since all the techniques mentioned above have the construction such that the glaze is applied on a surface of the porcelain insulator main body, the steep front of wave flashover strength can be improved to some extent, but a drastic improvement of the steep front of wave flashover strength cannot be achieved.

Here, the glaze has a composition such that an amount of feldspar is increased in raw materials of the normal porcelain insulator such as talc, alumina and clay so as to generate a glass phase much more after firing. A result of X-ray analysis shows that the glass pnase is more than 70wt%. Therefore, the glaze is basically assumed to have the same excellent dielectric breakdown strength as that of the porcelain, but it is lower than the porcelain since pores are included therein. Since a dielectric constant of the pore (air) is relatively smaller than that of the glass phase that surrounds the pore, this reason is assumed to be that an electric field is concentrated at the pore if a potential is applied. Moreover, since a dielectric constant of the glaze is smaller than that of the porcelain insulator main body, the glaze becomes a weak point when a steep front of wave flashover pulse is applied to the porcelain insulator. Therefore, in the known porcelain insulator in which the glaze is applied to a surface of the porcelain insulator main body, it is understood that a drastic improvement of dielectric breakdown strength is difficult.

### SUMMARY OF THE INVENTION

An object of the present invention is to eliminate the drawbacks mentioned above and to provide a porcelain insulator and a method of manufacturing the same in which a dielectric breakdown strength i.e. impulse strength can be improved without decreasing a mechanical strength.

According to the invention, a porcelain insulator comprises a porcelain insulator main body and a coating layer formed on a surface of the porcelain insulator main body, said coating layer being made of porcelain raw materials including mainly materials of high dielectric constant and having a relative dielectric constant larger than 4, wherein a ratio between maximum value and minimum value of relative dielectric constants at micro portions in the coating layer along a thickness direction of the coating layer is smaller than 2.

Moreover, according to the invention, a method of manufacturing a porcelain insulator having a porcelain insulator main body and a coating layer formed on a surface of the porcelain insulator main body, comprising the steps of;
(1) preparing said porcelain insulator main body; (2) preparing coating materials as a slurry by (a) grinding raw materials and mixing a clay therein to prepare porcelain raw materials made of 50-60 wt% of SiO₂, 20-30 wt% of Al₂O₃ and a remainder of MgO, CaO, K₂O, Na₂O, (b) preparing materials of high dielectric constant having a relative dielectric constant larger than 10 separately; and (c) mixing 100 parts by weight of the thus prepared porcelain raw materials and 3-10 parts by weight of the thus prepared materials of high dielectric constant; (3) applying the thus prepared coating materials on a surface of the porcelain main body; and (4) firing the porcelain main body in which the coating materials are applied on its surface.

In the porcelain insulator according to the invention, since the coating layer, in which a ratio between maximum value and minimum value of relative dielectric constants at micro portions is uniform such as smaller than 2 and a relative dielectric constant is larger than 4, that is, in which materials having a high dielectric constant are uniformly dispersed, is formed on a surface of the porcelain insulator main body, a relative dielectric constant of the coating layer which becomes a weak point when an impulse voltage is applied to the porcelain insulator can be made closer to that of the porcelain insulator main body. In addition, the number of pores can be decreased, so that the portions at which a steep front of wave flashover voltage applied to the coating layer is concentrated can be eliminated. Moreover, the coating layer can apply a compression stress equal to or larger than that of the known glaze to the porcelain insulator main body. As a result, it is possible to improve a steep front of wave flashover strength characteristic of the porcelain insulator while maintaining its mechanical strength. Further, in a method of manufacturing the porcelain insulator according to the invention, it is found that the coating layer mentioned above can be obtained, not by mixing materials having a high dielectric constant with raw materials from the first and firing, but by mixing them with raw materials afterward and firing.

### BRIEF DESCRIPTION OF THE DRAWINGS

Fig. 1 is a partial cross sectional view showing one embodiment of a suspension insulator as an example of a porcelain insulator according to the invention;
Fig. 2 is a schematic view illustrating a manufacturing step of coating materials used in a method of manufacturing the porcelain insulator according to the invention; and
Figs. 3a and 3b are schematic views respectively depicting a concept of a sample for measurement.

### DESCRIPTION OF THE PREFERRED EMBODIMENT

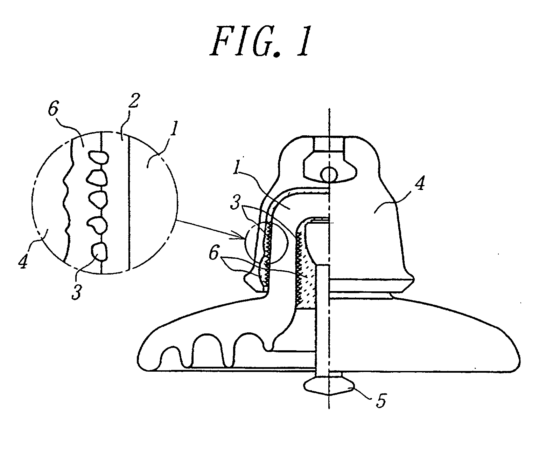

Fig. 1 is a partial cross sectional view showing one embodiment of a suspension insulator as an example of a porcelain insulator according to the invention. In the embodiment shown in Fig. 1, a numeral 1 is a suspension insulator main body made of porcelain, and a numeral 2 is a coating layer arranged on a surface of the suspension insulator main body 1, in which materials having a high dielectric constant are included and which is made mainly of porcelain raw materials. Moreover, a numeral 3 is an procelain sand adhered to the coating layer 2, and a numeral 4 is a cap member. Further, a numeral 5 is a pin member, and a numeral 6 is a cement which connects the cap member 4 and the sand 3 and also connects the pin member 5 and the sand 3. The suspension insulator shown in Fig. 1 can be manufactured by preparing a formed insulator main body; coating, drying and firing a predetermined coating layer to a surface of the thus prepared insulator main body 1 so as to obtain the suspension insulator main body 2 by utilizing the cement 6. In the suspension insulator shown in Fig. 1, a feature of the present invention lies in characteristics and a composition of the coating layer 2.

That is to say, as the characteristics of the coating layer 2, it is necessary to be uniform in such a manner that a ratio between maximum value and minimum value of relative dielectric constants at micro portions in the coating layer is smaller than 2 and to have a relative dielectric constant larger than 4. In addition, a thickness of the coating layer is not particularly limited, but a thickness of 0.1 mm-0.5 mm is preferred from the view points of a steep front of wave flashover strength characteristic improvement and a mechanical strength improvement. Moreover, a thermal expansion coefficient difference between the coating layer 2 and the suspension insulator main body 1 is not particularly limited, but it is preferred to be 0.1-0.2% (at a temperature range of 40-650°C) since the mechanical strength is improved. Such a uniform coating layer 2 mentioned above can be obtained by coating a coating material produced according to the following manufacturing method to a surface of the insulator main body and firing it.

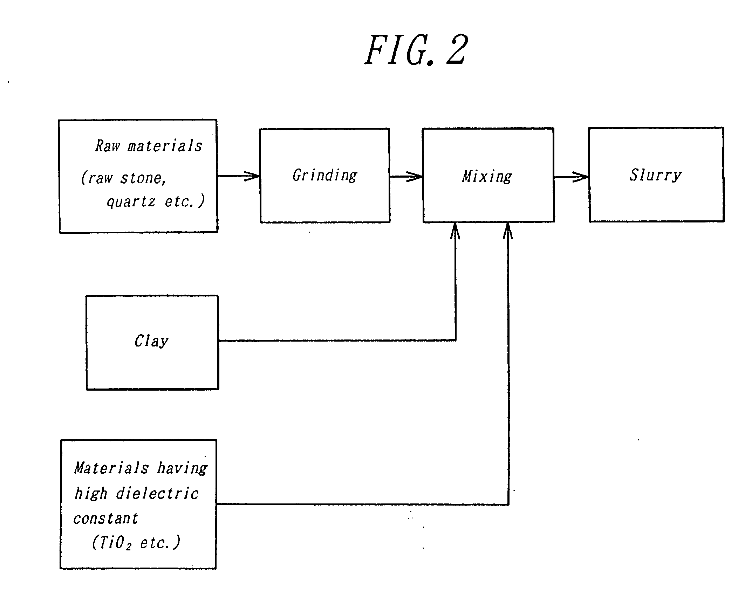

Fig. 2 is a schematic view showing a manufacturing step of coating materials for the porcelain insulator according to the invention. In the example shown in Fig. 2, at first, raw materials such as china stone, feldspar, silica sand and magnesite are ground for, for example, 10 hours and are mixed with clay so as to prepare porcelain raw materials having a composition of SiO₂: 50-60wt%, Al₂O₃: 20-30wt% and a remainder of MgO, CaO, K₂O and Na₂O. At the same time, materials having a high dielectric constant such that a relative dielectric constant is larger than 10 and having preferably an average particle size of 0.1-5µm are prepared. Then, during the mixing step of the above mentioned porcelain raw materials with the clay, 3-10 parts by weight of the thus prepared materials having a high dielectric constant are added with respect to 100 parts by weight of the thus prepared porcelain raw materials and are mixed with the porcelain raw materials for, for example, 30 minutes so as to obtain a slurry. The thus obtained slurry is the coating material for the insulator according to the invention. Here, a calcined clay may be used as the clay.

As the materials having a high dielectric constant, it is necessary to use materials having a relative dielectric constant larger than 10 at 1 MHz, and it is preferred to use titanium oxide and a compound of titanium oxide (MgTiO₃, CaTiO₃, BaTiO₃, MgO·Al₂O₃·3TiO₂). As the base composition, porcelain raw materials having similar composition as that of the insulator main body is used and materials having a high dielectric constant is used, so that a dielectric constant of the coating materials for the insulator according to the invention can be made larger than 4 which is close to a relative dielectric constant of the insulator main body. Moreover, a porosity of the coating layer can be decreased as compared with that of the glaze. Therefore, in the case that the coating layer is formed by coating the coating materials on a surface of the insulator main body and firing it, the coating layer has a higher relative dielectric constant and a lower porosity as compared with the known glaze layer, and a failure of the insulator due to the coating layer can be eliminated even if a steep front of wave flashover such as thunder and so on is applied.

The reason for using the materials having a relative dielectric constant larger than 10 as the materials having a high dielectric constant is that there is a case such that a relative dielectric constant of the coating layer after firing is not larger than 4 even by increasing an additional amount of the materials having a high dielectric constant if it is not larger than 10. Moreover, an additional amount of the materials having a high dielectric constant is limited to 3-10 parts by weight with respect to 100 parts by weight of porcelain raw materials. As the additional amount is varied in response to a relative dielectric constant of the materials having a high dielectric constant. However, if the additional amount is not larger than 3 parts by weight, the case such that a relative dielectric constant of the coating layer after firing can not be made larger than 4 is increased. On the other hand, if the additional amount is not smaller than 10, a steep front of wave flashover strength is lowered. The reason is assumed as follows. That is, a relative dielectric constant of the coating layer is higher than that of the insulator main body, and an electric field concentration is liable to occur at the pores. Moreover, it is also assumed to be a cause that a reaction with the coating materials easily generates the pores. Therefore, in the present invention, an additional amount of the materials having a high dielectric constant is limited to 3-10 parts by weight. Here, the reason for limiting a relative dielectric constant of the coating layer after firing to larger than 4 is that, in the insulator in which the coating materials according to the invention are coated on a surface of the insulator main body and fired, a steep front of wave flashover strength is good if a relative dielectric constant is larger than 4.

Here, a method of manufacturing the coating materials according to the invention means an after addition method in which the materials having a high dielectric constant are added not when the raw materials are ground but when the raw materials are mixed with the clay. Moreover, a method of manufacturing the coating materials according to a comparative example means a simultaneous addition method in which the materials having a high dielectric constant are added when the raw materials are ground. In the case that titanium oxide (TiO₂) is used as the materials having a high dielectric constant, due to a difference between the simultaneous addition method and the after addition method, a generation of MgO·Al₂O₃·3TiO₂ of the TiO₂ compound which functions to improve a dielectric constant and a remaining titanium oxide are respectively different therebetween, and these differences are assumed to make a difference on their steep front of wave flashover strengths. That is, sizes of TiO₂, when the raw materials are mixed with the clay, are different, i.e., a size of TiO₂ is large in the after addition method but a size of TiO₂ is small in the simultaneous addition method. Therefore, in the simultaneous addition method, a compound generation during the firing step is promoted, so that an amount of TiO₂ compound is increased. This TiO₂ compound is assumed to be unevenly precipitated and to increase a variation of a relative dielectric constant. Therefore, in the simultaneous addition method, a relative dielectric constant of the coating layer is varied. On the other hand, an uneven precipitation of the TiO₂ compound is not detected on a surface of the coating layer or in the coating layer, i.e., a dielectric constant of the coating layer is not varied and becomes even. Therefore, in the after addition method, a steep front of wave flashover strength is assumed to be generated.

### (Experiment)

In order to examine a variation of a relative dielectric constant and an influence of a relative dielectric constant in the coating layer, the suspension insulators of an example of the present invention and a comparative example having the same dimension as that shown in Fig. 1 were manufactured. In this case, the suspension insulator of the example of the present invention was controlled in such a manner that a ratio of relative dielectric constants in the coating layer was smaller than 2 and its relative dielectric constant was larger than 4. On the other hand, the suspension insulator of the comparative example was controlled in such a manner that the ratio mentioned above was not smaller than 2 or its relative dielectric constant was not larger than 4. An impulse strength was examined on the basis of a puncture rate (penetration number/sample number) when steep front of wave flashover voltages of 2500 and 3000 kV/µs were applied at 20 times respectively with respect to the thus manufactured suspension insulators. Here, titanium oxide was used as the materials having a high dielectric constant, and porcelain stone, feldspar, silver sand and magnesite were used as the porcelain raw materials. Moreover, the porcelain raw materials had a composition of SiO₂:50-60wt%, Al₂O₃:20-30wt%. The suspension insulator according to the example of the present invention utilized the after addition method mentioned above, and the suspension insulator according to the comparative example utilized the simultaneous addition method mentioned above. Moreover, since the puncture rate of an actual insulator was very small, an acceleration test was performed in such a manner that an experiment insulator in which a leakage distance is made short as compared with the actual insulator and the puncture rate is assumed to be about ten times as that of the actual insulator. Further, one of the comparative examples showed the insulator utilizing the known glaze. The results are shown in Table 1.

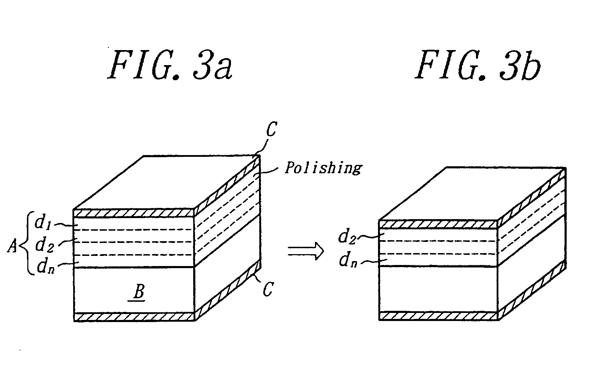

Relative dielectric constants at micro portions in the coating layer was measured by polishing a surface of the coating layer after firing little by little, measuring capacitance of the coating layer every polishing operations, and calculating relative dielectric constants at micro portions in the coating layer from the measured capacitance. Figs. 3a and 3b are schematic views respectively showing a concept of a sample for measurement. In the embodiments shown in Figs. 3a and 3b, a symbol A is a coating layer, a symbol B is a porcelain and a symbol C is a silver paste for the capacitance measurement. Moreover, d₁ is a layer removed by a first polishing operation, d₂ is a layer removed by a second polishing operation and dₙ is a layer removed by an n^{th} polishing operation. Under such conditions, a capacitance of the d₁ layer removed by the polishing operation is calculated from a capacitance of all the layers d₁, d₂-dₙ before the polishing operation and a capacitance of the layers d₂-dₙ after removing the layer d1 by the polishing operation, and a relative dielectric constant of the layer d₁ can be obtained from the thus calculated capacitance. In this example, a thickness of the porcelain B is made as thin as possible so as to improve a measurement accuracy of dielectric constants in the coating layer A. As one example, a thickness of the porcelain B was 1 mm.

**Table 1**

| | | Relative dielectric constant of coating layer | Maximum value/minimum value of relative dielectric constant | Puncture rate (%) | |
|---|---|---|---|---|---|
| | | | | 2500 KV/µs | 3000 KV/µs |
| Examples of present invention | 1 | 4.1 | 1.2 | 0 | 0 |
| | 2 | 4.8 | 1.8 | 0 | 2 |
| | 3 | 5.3 | 1.6 | 0 | 0 |
| | 4 | 5.6 | 1.9 | 0 | 2 |
| | 5 | 5.9 | 1.1 | 0 | 0 |
| | 6 | 6.4 | 1.2 | 0 | 0 |
| | 7 | 7.8 | 1.4 | 0 | 0 |
| | 8 | 9.3 | 1.7 | 0 | 7 |
| Comparative example | 9 | 3.1 | 1.3 | 90 | 100 |
| | 10 | 5.5 | 2.5 | 63 | 100 |
| | 11 | 7.9 | 2.2 | 53 | 100 |
| | 12 | 3.8(Glaze) | 1.6 | 86 | 100 |

From the results shown in Table 1, the followings are understood. In the example of the present invention in which a ratio between maximum value and minimum value of relative dielectric constants at micro portions in the coating layer is smaller than 2 and a relative dielectric constant is larger than 4, a puncture rate is low and thus a steep front of wave flashover strength is excellent. On the other hand, in the comparative example in which the above ratio in the coating layer is not smaller than 2 or a relative dielectric constant is not larger than 4 or the known glaze is used, a puncture rate is high and thus a steep front of wave flashover becomes worse.

In the examples mentioned above, the porcelain insulator in which the predetermined coating layer 2 is formed on a surface of the porcelain insulator main body 1, but a second coating layer made of glaze may be arranged on the coating layer 2. In this case, the second coating layer functions to adhere the sand 3 on an outer surface and an inner surface of a head portion of the porcelain insulator main body 1. A thickness of the second coating layer is not particularly limited, but it is preferred to be smaller than 0.5 mm from the view point of the steep front of wave flashover strength improvement since pores are generated in the glaze if it is not smaller than 0.5 mm. In this case, it is preferred to form the glaze by utilizing feldspar-rich glaze raw materials having a composition of SiO₂: not larger than 60-70 wt%, Al₂O₃: not larger than 15-20 wt%. Moreover, in the example mentioned above, the predetermined coating layer 2 is formed on all the surface of the porcelain insulator main body 1, but the coating layer 2 may be formed on a part of the surface and the known glaze layer may be formed on the remaining part of the surface. Further, the present invention can be applied to a sand-less insulator in which no sand is used. Furthermore, the firing operation may be performed under not only a reducing atmosphere but also an oxidizing atmosphere.

Moreover, in the present invention, the materials having a high dielectric constant is added to the porcelain raw materials, but, in the case that the materials having a high dielectric constant is added in the glaze raw materials and the firing operation is performed, bubbling phenomena occur. Moreover, large pores are generated in the glaze and a porosity becomes larger. Therefore, it is not possible to add the materials having a high dielectric constant to the glaze raw materials. This reason is assumed as follows. Since the glaze raw materials have a good reactivity for the materials having a high dielectric constant, bubbling is liable to occur. In addition, since the glaze raw materials have a low softening temperature as compared with the materials having a high dielectric constant, the bubbled pores are liable to be closed. Further, the coating layer according to the invention has crystals of cordierite: 20-45 wt%, mullite: smaller than 20 wt%, quartz: smaller than 5 wt% and a remainder of glass phase (smaller than 65 wt%) other than that of the materials having a high dielectric constant by utilizing X-ray analysis.

As clearly understood from the above explanations, according to the invention, since the coating layer, in which a ratio between maximum value and minimum value of relative dielectric constants at micro portions is uniform such as smaller than 2 and a relative dielectric constant is larger than 4, that is, in which materials having a high dielectric constant are uniformly dispersed, is formed on a surface of the porcelain insulator main body, a relative dielectric constant of the coating layer which becomes a weak point when a steep front of wave flashover impulse voltage is applied to the porcelain insulator can be made closer to that of the porcelain insulator main body. In addition, the number of pores can be decreased, so that the portions at which an impulse voltage applied to the coating layer is concentrated can be eliminated. Moreover, the coating layer can apply a compression stress equal to or larger than that of the known glaze to the porcelain insulator main body. As a result, it is possible to improve a steep front of wave flashover characteristic of the porcelain insulator while maintaining its mechanical strength.

## Claims

1. A porcelain insulator comprising a porcelain insulator main body (1) and a coating layer (2) formed on a surface of the porcelain insulator main body, said coating layer being made of porcelain raw materials including mainly materials of high dielectric constant and having a relative dielectric constant larger than 4, wherein a ratio between maximum value and minimum value of relative dielectric constants at micro portions in the coating layer along a thickness direction of the coating layer is smaller than 2.

2. The porcelain insulator according to claim 1, wherein said coating layer is obtained by firing coating materials including 100 parts by weight of porcelain raw materials made of 50-60 wt% of SiO₂, 20-30 wt% of Al₂O₃ and a remainder of MgO, CaO, K₂O, Na₂O,and 3-10 parts by weight of the materials of high dielectric constant having a relative dielectric constant larger than 10.

3. The porcelain insulator according to claim 1, wherein said materials of high dielectric constant are made of titanium oxide or a compound of titanium oxide.

4. A method of manufacturing a porcelain insulator having a porcelain insulator main body and a coating layer formed on a surface of the porcelain insulator main body, comprising the steps of;
(1) preparing said porcelain insulator main body;
(2) preparing coating materials as a slurry by (a) grinding raw materials and mixing a clay therein to prepare porcelain raw materials made of 50-60 wt% of SiO₂, 20-30 wt% of Al₂O₃ and a remainder of MgO, CaO, K₂O, Na₂O, (b) preparing materials of high dielectric constant having a relative dielectric constant larger than 10 separately; and (c) mixing 100 parts by weight of the thus prepared porcelain raw materials and 3-10 parts by weight of the thus prepared materials of high dielectric constant;
(3) applying the thus prepared coating materials on a surface of the porcelain main body; and
(4) firing the porcelain main body in which the coating materials are applied on its surface.

5. The method of manufacturing the porcelain insulator according to claim 4, wherein the materials of high dielectric constant are made of titanium oxide or a compound of titanium oxide.

6. The method of manufacturing the porcelain insulator according to claim 4, wherein an average particle size of the materials of high dielectric constant is 0.1-5 µm.

## Patentansprüche

1. Porzellanisolator, der einen Porzellanisolatorgrundkörper (1) und eine auf der Oberfläche des Porzellanisolatorgrundkörpers gebildete Überzugsschicht (2) umfaßt, die Überzugsschicht ist aus Porzellanrohmaterialien hergestellt, die hauptsächlich Materialien mit hoher dielektrischer Konstante und mit einer relativen dielektrischen Konstante größer als 4 einschließen, wobei ein Verhältnis zwischen Maximalwert und Minimalwert der relativen dielektrischen Konstanten in Mikrobereichen in der Überzugsschicht entlang einer Dickenrichtung der Überzugsschicht kleiner als 2 ist.

2. Porzellanisolator nach Anspruch 1, wobei die Überzugsschicht durch Brennen von Überzugsmaterialien erhalten wird, die 100 Gewichtsteile Porzellanrohmaterialien einschließen, die aus 50 - 60 Gew.-% SiO₂, 20 - 30 Gew.-% Al₂O₃ und einem Rest von MgO, CaO, K₂O, Na₂O zubereitet sind, wobei 3 - 10 Gewichtsteilen der Materialien mit hoher dielektrischer Konstante eine relative dielektrische Konstante größer als 10 aufweisen

3. Porzellanisolator nach Anspruch 1, wobei die Materialien mit hoher dielektrischer Konstante aus Titanoxid oder einer Verbindung von Titanoxid hergestellt sind.

4. Verfahren zur Herstellung eines Porzellanisolators mit einem Porzellanisolatorgrundkörpers und einer auf einer Oberfläche des Porzellanisolatorgrundkörpers gebildeten Überzugsschicht, die Schritte umfassend:
(1) Herstellen des Porzellanisolatorgrundkörpers;
(2) Herstellen von Überzugsmaterialien als Schlicker durch (a) Mahlen der Rohmaterialien und Einmischen eines Tons, um Porzellanrohmaterialien bestehend aus 50 - 60 Gew.-% SiO₂, 20 - 30 Gew.-% Al₂O₃ und einem Rest von MgO, CaO, K₂O, Na₂O herzustellen, (b) gesondertes Herstellen von Materialien mit hoher dielektrischer Konstante mit einer relativen dielektrischen Konstante größer als 10 und (c) Mischen von 100 Gewichtsteilen der auf diese Weise hergestellten Porzellanrohmaterialien und 3 - 10 Gewichtsteilen von auf diese Weise hergestellten Materialien von hoher dielektrischer Konstante;
(3) Aufbringen der auf diese Weise hergestellten Überzugsmaterialien auf eine Oberfläche des Porzellangrundkörpers; und
(4) Brennen des Porzellangrundkörpers, bei welchem die Überzugsmaterialien auf seiner Oberfläche aufgebracht sind.

5. Verfahren zur Herstellung des Porzellanisolators nach Anspruch 4, wobei die Materialien mit hoher dielektrischer Konstante aus Titanoxid oder einer Verbindung von Titanoxid hergestellt sind.

6. Verfahren zur Herstellung des Porzellanisolators nach Anspruch 4, wobei eine mittlere Teilchengröße der Materialien mit hoher dielektrischer Konstante bei 0,1 - 5 µm liegt.

## Revendications

1. Isolateur en porcelaine comprenant un corps principal d'isolateur en porcelaine (1) et une couche de revêtement (2) formée sur une surface du corps principal d'isolateur en porcelaine, ladite couche de revêtement étant composée de matières premières de porcelaine comprenant principalement des matières à constante diélectrique élevée et ayant une constante diélectrique relative supérieure à 4, dans lequel un rapport entre une valeur maximale et une valeur minimale de constantes diélectriques relatives au niveau de microparties dans la couche de revêtement dans une direction de l'épaisseur de la couche de revêtement est inférieur à 2.

2. Isolateur en porcelaine selon la revendication 1, dans lequel ladite couche de revêtement est obtenue en faisant cuire des matières de revêtement comprenant 100 parties en poids de matières premières de porcelaine, constituées de 50 à 60 % en poids de SiO₂, de 20 à 30 % en poids de Al₂O₃ et d'un reliquat en MgO, CaO, K₂O, Na₂O, et 3 à 10 parties en poids des matières à constante diélectrique élevée ayant une constante diélectrique relative supérieure à 10.

3. Isolateur en porcelaine selon la revendication 1, dans lequel lesdites matières à constante diélectrique élevée sont constituées d'oxyde de titane ou d'un composé d'oxyde de titane.

4. Procédé de fabrication d'un isolateur en porcelaine ayant un corps principal d'isolateur en porcelaine et une couche de revêtement formée sur une surface du corps principal d'isolateur en porcelaine, comprenant les étapes consistant à :
(1) préparer ledit corps principal d'isolateur en porcelaine ;
(2) préparer les matières de revêtement sous forme de suspension (a) en broyant les matières premières et en y mélangeant une argile afin de préparer des matières premières de porcelaine constituées de 50 à 60 % en poids de SiO₂, de 20 à 30 % en poids de Al₂O₃ et d'un reliquat en MgO, CaO, K₂O, Na₂O, (b) en préparant séparément les matières à constante diélectrique élevée ayant une constante diélectrique relative supérieure à 10 ; et (c) en mélangeant 100 parties en poids des matières premières de porcelaine ainsi préparées et 3 à 10 parties en poids des matières à constante diélectrique élevée ainsi préparées ;
(3) appliquer les matières de revêtement ainsi préparées sur une surface du corps principal d'isolateur en porcelaine ; et
(4) faire cuire le corps principal d'isolateur en porcelaine sur la surface duquel sont appliquées les matières de revêtement.

5. Procédé de fabrication d'un isolateur en porcelaine selon la revendication 4, dans lequel les matières à constante diélectrique élevée sont constituées d'oxyde de titane ou d'un composé d'oxyde de titane.

6. Procédé de fabrication d'un isolateur en porcelaine selon la revendication 4, dans lequel une dimension moyenne des particules dans les matières à constante diélectrique élevée se situe entre 0,1 et 5 µm.
